# EUROPÄISCHE PATENTANMELDUNG

(11) **EP 3 098 135 A1**
(43) Veröffentlichungstag der Anmeldung: **30.11.2016**
(21) Anmeldenummer: 16001208.4
(22) Anmeldetag: 28.05.2016
(51) Int. Cl.: B62B 3/14

(54) **SICHERHEITSGURT**

(30) Priorität: 28.05.2015 DE 202015003875 U
(71) Anmelder: Siegrist, Gabriela, 79594 Inzlingen (DE)
(72) Erfinder: Siegrist, Gabriela, 79594 Inzlingen (DE)

(57) **Zusammenfassung**

Die Erfindung bezieht sich auf einen Sicherheitsgurt zur Anwendung bei einem Einkaufswagen der mit einem Kindersitz ausgestattet ist. Er besteht aus einem Materialstreifen (1) mit der Breite eines Hosengürtels, einer Längenverstellung und zwei Befestigungsmitteln (2, 6) an jedem Ende des Gurtes. Der Sicherheitsgurt ist für alle sich im Umlauf befindlichen Einkaufswagen geeignet, er verhindert das Aufstehen, das herumklettern und das stürzen aus über einem Meter Fallhöhe.

Die beiden Befestigungsmittel (2, 6) sind Karabinerhaken. Der Sicherheitsgurt wird in die quer verlaufenden Streben des Kindersitzes lösbar angebracht. Auf dem Sicherheitsgurt ist ein verschiebbares Zusatzteil (11) angebracht für das Anbringen von kleinen Gegenständen (12). Das Zusatzteil (11) ist ein Materialstreifen der in einer Schlaufe gelegt, mit einer anderen Schlaufe auf dem Sicherheitsgurt verschiebbar angebracht wird. Die Aufnahme des Zusatzteiles (11) funktioniert über eines am anderen Ende angebrachten Verschlusses.

## Beschreibung

Die Erfindung bezieht sich auf einen Sicherheitsgurt zur Anwendung bei einem mit einem Kindersitz ausgestatteten Einkaufswagen.

Einkaufswagen in Lebensmittelmärkten und anderen Supermärkten sind heutzutage überwiegend mit einem Kindersitz ausgestattet, der sich bei Bedarf von der Rückwand des Einkaufswagens in den Raum des Einkaufswagens hinein ausklappen lässt. Rückwand, Seitenwände und Vorderwand gängiger Einkaufswagen bestehen aus einer Stäbekonstruktion, bei der vertikal verlaufende Längsstäbe durch eine Anzahl Querstäbe in einem Abstand zueinander fest gehalten und entsprechend der gewünschten Form des Einkaufswagens fixiert sind. Durch stabförmige Rahmen sind die Wände abgeschlossen. Auch der Boden des Einkaufswagens besteht aus längs und quer verlaufenden Stäben. Die dem Benutzer des Einkaufswagens zugewandte Rückwand ist meist leicht geneigt, und aus dieser Rückwand lässt sich der Kindersitz in den Einkaufswagen hinein ausklappen. Dabei ist eine Sitzplatte des Kindersitzes mit ihrer einen Längskante verschwenkbar an einem der Querstäbe etwa auf halber Höhe der Rückwand befestigt, die andere Längskante ist gleitbar an einem nach unten offenen Rahmen gehalten, der einerseits die Rückenlehne des Kindersitzes einfasst und andererseits mit seinen offenen Enden an einem weiteren, tiefer iiegende Querstab der Rückwand verschwenkbar gehalten ist. Die von dem Rahmen eingefasste Rückenlehne besteht ebenfalls aus im Wesentlichen vertikal verlaufenden Längsstäben, die durch mindestens zwei Querstäbe gehalten sind. Im Bereich der Sitzplatte des Kindersitzes fehlen einige der Längsstäbe in der Rückwand des Einkaufswagens bzw. sind die Abstande weit genug gehalten, damit ein auf der Sitzplatte sitzendes Kind seine Beine hindurchstrecken und so eine quasi normale Sitzhaltung einnehmen kann, während der Wagen vom Benutzer durch den Einkaufsraum geschoben wird.

Leider ist es dabei während des Einkaufs schon wiederholt zu Unfällen gekommen, denn immer wieder versuchen Kinder in dem Kindersitz aufzustehen und sich vor oder nach der Seite zu lehnen, um nach Waren oder Gegenständen zu greifen; häufig werden sie dazu durch die Auslage und Anordnung von Waren, z.B. im Wartebereich der Kassen des Marktes, auch regelrecht verführt. Es sind Kinder dabei schon aus dem Sitz des Einkaufswagens herausgestürzt und in schlimmen Fällen mit dem Kopf auf den harten Steinfußboden des Verkaufsmarktes aufgeschlagen, oder sie sind zusammen mit dem Einkaufswagen umgestürzt, wenn sie mit ihren Beinen in der für ihre Beine in der Rückwand des Einkaufswagens vorgesehenen Aussparungen hängen geblieben sind. Es ist offensichtlich, dass es dabei zu ernsthaften Verletzungen kommen kann.

Es besteht daher Bedarf nach einer Vorrichtung, mit der ein im Kindersitz eines an sich bekannten Einkaufswagens sitzendes Kind zuverlässig gegen Herausfallen oder Umstürzen gesichert werden kann.

Die DE 20 2005 012 535 U1 schlägt eine Vorrichtung mit Rückhaltegurt für Einkaufswagen vor, die ein flaches, langgestrecktes Gehäuse umfasst, aus dessen einer Schmalseite sich ein im Gehäuse untergebrachter Gurt gegen die Kraft einer Zugfeder herausziehen lässt. Das immer sichtbare Gurtende weist eine Schnalle auf, mit deren Hilfe das Gurtende zum Herausziehen erfasst werden kann und die in eine Aufnahme an der anderen Schmalseite des Gehäuses eingeklinkt werden kann und darin durch einen Betätigungsmechanismus sicher gehalten wird. Um eine ausreichende Länge des Gurtes zur Verfügung zu haben, ist der Gurt im Innern des Gehäuses um einen Schlitten geführt und an der erwähnten Zugfeder befestigt, die beim Herausziehen des Gurtes gespannt wird. Beim Einrasten der Gurtschnalle in die Aufnahme wird ein Betätigungsmechanismus ausgelöst, der den Schlitten in seiner Bewegung blockiert und so den Gurt in seiner momentanen Länge fixiert. Werden die Gurtschnalle und der Betätigungsmechanismus gelöst, kann die Zugfeder den Schlitten wieder bewegen und den Gurt zurück ins Gehäuse ziehen. Für den Einsatz dieser recht komplizierten und umständlich zu betätigenden Vorrichtung muss das Gehäuse an der Rückenlehne des Kindersitzes eines Einkaufswagens befestigt werden; dazu sind an der Rückseite des Gehäuses Befestigungselemente in Form von Schnappelementen vorgesehen, mit denen sich das Gehäuse an Gitterstäben eines Einkaufswagens befestigen lässt. Es hat sich allerdings gezeigt, dass die Abstände der Gitterstäbe je nach Modell des Einkaufswagens nicht einheitlich sind, so dass hinsichtlich der Befestigung eine Anpassung an den jeweiligen Wagentyp erforderlich sein kann.

Die DE 20 2009 014 783 U1 schlägt eine Vorrichtung vor, bei der sich ebenfalls ein Rückhaltegurt in einem am Einkaufswagen zu befestigenden Gehäuse befindet und aus diesem herausgezogen werden kann. Zur Befestigung des Gehäuses an Gitterstäben des Einkaufswagens werden Befestigungselemente vorgeschlagen, die jeweils einen Gitterstab des Wagens umgreifen und klammerartige Vorsprünge aufweisen, die zwischen den Gitterstäben hindurchgreifen und Nuten aufweisen, in die an dem Gehäuse ausgebildete Kanten eingreifen können. Jedes der Befestigungselemente ist entlang des Gitterstabes, den es umgreift, verschiebbar und mittels einer Schraube feststellbar. Diese Art der Befestigung ist somit nicht abhängig vom Abstand der Gitterstäbe eines Einkaufswagentyps.

Nachteilig an diesen beiden Vorrichtungen ist, dass sie fest mit dem Einkaufswagen verbunden werden müssen und so einen Teil des Einkaufswagens selbst bilden. Jeder Einkaufswagen, der eine solche Kindersicherung aufweisen soll, müsste entweder vom Hersteller schon bei der Neuherstellung mit einer solchen Vorrichtung ausgestattet werden oder er müsste mit einer solchen Vorrichtung nachgerüstet werden. Dabei sind die Vorrichtungen in Aufbau und Funktionsweise recht kompliziert. Die Herstellung und das Anbringen einer solchen Kindersicherung sind umständlich und kostenintensiv. Außerdem können die Vorrichtungen bei dem üblichen Zusammenschieben der gerade nicht benutzten Einkaufswagen hinderlich sein und beanspruchen zusätzlichen Raum.

Die DE 20 2013 009 424 U1 schlägt eine mobile Sitzhilfe bzw. Sitzstütze für Kleinkinder vor, welche in den ausklappbaren Sitz eines Einkaufswagens eingesetzt werden kann. Sie besteht aus einer Rückenplatte, welche mit Hilfe von verstellbaren und an der Rückseite der Platte vorgesehenen Einhängehaken im Kindersitz eines Einkaufswagens eingehängt werden kann. An der Vorderseite der Rückenplatte ragen höhenverstellbar zwei abgerundete Stützscheiben ab, die einem Kind seitlichen Halt geben sollen. Kinder mit instabilem Sitzverhalten sollen damit stabilisiert werden. Mit einer solchen Vorrichtung kann ein Kind zwar seitlich und am Rücken abgestützt werden, es kann aber nicht daran gehindert werden, sich weit vorzubeugen, versuchen aufzustehen und sich auch dabei noch vorzubeugen, um z.B. nach Gegenständen, wie Süßigkeiten und dergl., zu greifen. Die Gefahr eines Sturzes ist damit also nicht gebannt. Die Sitzstütze muss vom Benutzer für den Gebrauch mitgeführt, in den Kindersitz eingesetzt und wieder entnommen werden. Dazu ist an der Rückenplatte ein Eingriffsloch vorgesehen. Dennoch ist das Mitführen dieser recht sperrigen Sitzstütze umständlich und in mancherlei Hinsicht eine zusätzliche Belastung für den Benutzer.

Es wurde auch schon eine Vorrichtung zur Kindersicherung im Kindersitz eines Einkaufswagens bekannt, die aus einem breiten, über nahezu die gesamte Brust des Kindes reichenden, gepolsterten, korsettartigen Gurt besteht. Die beidseitigen Enden dieses Gurtes können zwischen zwei vertikal verlaufenden Gitterstäben an der Rückenlehne des Kindersitzes hindurch geschoben und mittels Klettverschluss miteinander verbunden werden. Mit dieser Vorrichtung wird ein Kind infolge der Breite des Gurtes quasi fixiert und auch an kleinen Bewegungen gehindert, was manches Kind eher unruhig werden lässt, so dass es versuchen wird, sich einer solchen wiederholten Prozedur zu widersetzen. Indem die Enden des breiten Gurtes um die vertikal verlaufenden Gitterstäbe der Rückenlehne geschlungen werden, kann sich der Gurt unbeabsichtigt in der Höhe verstellen und für das Kind eine weitere Unbequemlichkeit bilden. Der breite und gepolsterte Gurt nimmt, wenn er zum Einkauf mitgeführt wird, zusätzlichen Raum im Einkaufsbehältnis des Benutzers ein.

Aufgabe der Erfindung ist es, einen Sicherheitsgurt zur Anwendung bei einem mit einem Kindersitz ausgestatteten Einkaufswagen zu schaffen, mit dem ein im Kindersitz sitzendes Kind zuverlässig gegen Herausstürzen aus dem Kindersitz und/oder Umstürzen mitsamt dem Einkaufswagen gesichert werden kann, ohne es in seinen sonstigen Bewegungen zu sehr einzuschränken. Der Sicherheitsgurt soll einfach und kostengünstig in der Herstellung und einfach in seiner Anwendung sein. Er soll, wenn er gerade nicht gebraucht wird, bequem und platzsparend auch für einen unerwarteten, zunächst nicht geplanten Einsatz mitgeführt werden können, ohne eine spürbare Unbequemlichkeit für den Benutzer zu bilden.

Erfindungsgemäß wird dies erreicht durch einen Sicherheitsgurt gemäß Anspruch 1.

Der erfindungsgemäße Sicherheitsgurt besteht aus einem Materialstreifen von der Breite eines normalen (Hosen-)Gürtels; an seinem einen Ende ist ein erstes Befestigungsmittel befestigt und eine Gürtelschnalle ist auf dem Sicherheitsgurt verschiebbar. Mit dem mittleren Steg dieser Gürtelschnalle ist das andere Ende des Sicherheitsgurtes fest verbunden, wozu dieses andere Ende auf den Materialstreifen bzw. den Sicherheitsgurt zurückgefaltet ist, so dass eine Schlaufe gebildet ist, in der ein zweites Befestigungsmittel beweglich gehalten ist. Mit den beiden Befestigungsmitteln kann der Sicherheitsgurt, nachdem er um den Unterleib eines im Kindersitz eines Einkaufswagens sitzenden Kindes gelegt wurde, schnell und sicher an Stäben der Rückenlehne des Kindersitzes befestigt werden. Durch Verschieben der Gürtelschnalle auf dem Sicherheitsgurt lässt sich dessen wirksame Länge nach Bedarf an die Körpergröße des zu sichernden Kindes in der Weise anpassen, dass es einerseits gehindert wird, im Kindersitz aufzustehen und/oder sich so weit vor oder zur Seite zu neigen, dass ein Übergewicht und die Gefahr eines Sturzes entsteht, andererseits wird es durch die begrenzte Breite des Sicherheitsgurtes in seiner Bewegungsmöglichkeit nicht so sehr eingeschränkt, dass es sich gegen das Anlegen des Gurtes wehren wird. Ein weiterer Vorteil ist, dass sich der Sicherheitsgurt, wenn er gerade nicht benutzt wird, so zusammenfalten lässt, dass er nur sehr wenig Platz oder Raum beansprucht und sich bequem in einer Einkaufs- oder Handtasche oder sogar Mantel- oder Hosentasche für eine eventuellen Gebrauch mitführen lässt. Für die Eltern ist es außerdem besonders vorteilhaft, dass sie beim Einkauf nicht ständig ein Auge und womöglich auch eine Hand beim Kind haben müssen und darauf achten müssen, dass es im Kindersitz sitzen bleibt; der Einkauf wird für sie somit stressfrei und entspannend.

Die beiden Befestigungsmittel sind vorzugsweise als Karabinerhaken ausgebildet; mit diesen lässt er sich bequem und schnell an Gitterstäben der Rückenlehne des Kindersitzes befestigen und auch wieder lösen. Wenn dabei die Befestigungsmittel bzw. die Karabinerhaken an einem in Höhe der Sitzplatte des Kindersitzes quer verlaufenden Stab der Rückenlehne befestigt wird, wird vermieden, dass sich die Befestigungsmittel und/oder der Sicherheitsgurt als Ganzes am Körper des Kindes in der Höhe verschiebt, was zu einer Unbequemlichkeit für das Kind und zu einer minderen Sicherheit führen würde.

Als sinnvolle Fortbildung kann auf dem Sicherheitsgurt ein Zusatzteil verschiebbar angeordnet sein, an dem kleine Gegenstände, wie Spielzeug oder ein Schnuller, beweglich angehängt werden können. So kann das Kind für die Zeit des Einkaufs beruhigt oder beschäftigt werden und wird nicht so leicht durch die Auslage bestimmter Waren verleitet, danach zu greifen und sich dazu weit vor oder zur Seite zu beugen.

Das Zusatzteil kann vorteilhaft aus einem zu einer Schlaufe gelegten Materialstreifen bestehen, mit weicher Schlaufe es auf dem Sicherheitsgurt verschiebbar ist; an seinem freien Ende können die kleinen Gegenstände angehängt werden.

Die Erfindung wird im Folgenden anhand der anhängenden Zeichnung näher beschrieben; es zeigen:
- Fig. 1: die Ansicht eines erfindungsgemäßen Sicherheitsgurtes,
- Fig. 2: ausschnittsweise den Blick auf die Rückenlehne eines besetzten Kindersitzes mit angelegtem Sicherheitsgurt und
- Fig. 3: die Ansicht des Sicherheitsgurtes nach Fig. 1 mit einem zusätzlichen Teil.

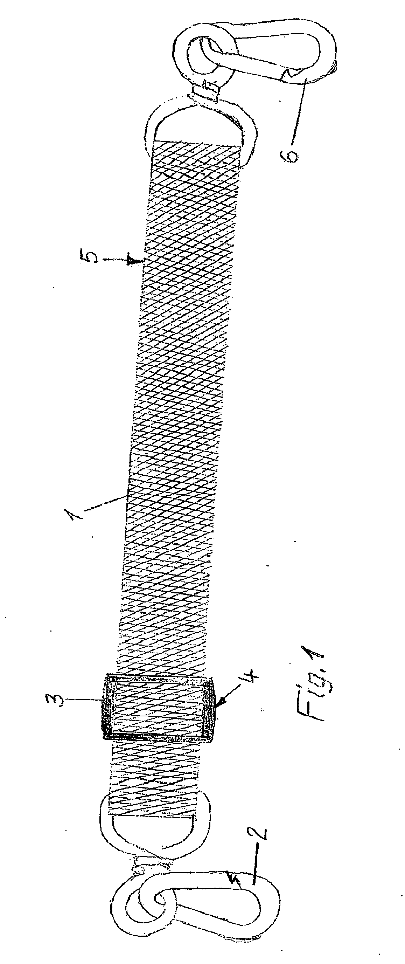

Gemäß Fig. 1 besteht der Sicherheitsgurt 1 aus einem schmalen Materialstreifen, dessen Breite etwa der eines normalen (Hosen-)Gürtels entspricht, d.h. ca. 2 cm beträgt. Das eine Ende des Sicherheitsgurtes 1 ist mit einem ersten Schnell-Befestigungsmittel 2, in der dargestellten Ausführungsform einem Karabinerhaken 2, fest verbunden. Jedes andere vorzugsweise hakenförmige Befestigungsmittel ist aber ebenso anwendbar. Auf dem Sicherheitsgurt 1 ist eine an sich bekannte Gürtelschnalle 3 verschiebbar. Mit dem mittleren, in der Zeichnung nicht direkt sichtbaren Steg 4 dieser Gürtelschnalle 3 ist das andere Ende des Sicherheitsgurtes 1 fest verbunden und dazu auf den Materialstreifen 1 des Sicherheitsgurtes 1 zurückgefaltet, sodass eine Schlaufe 5 gebildet ist, in der sich beweglich ein zweites Schnell-Befestigungsmittel 6, in der dargestellten Ausführungsform wiederum ein Karabinerhaken 6, befindet. Durch Verschieben der Gürtelschnalle 3 auf dem Sicherheitsgurt kann die wirksame Länge des Sicherheitsgurtes 1 nach Bedarf eingestellt werden.

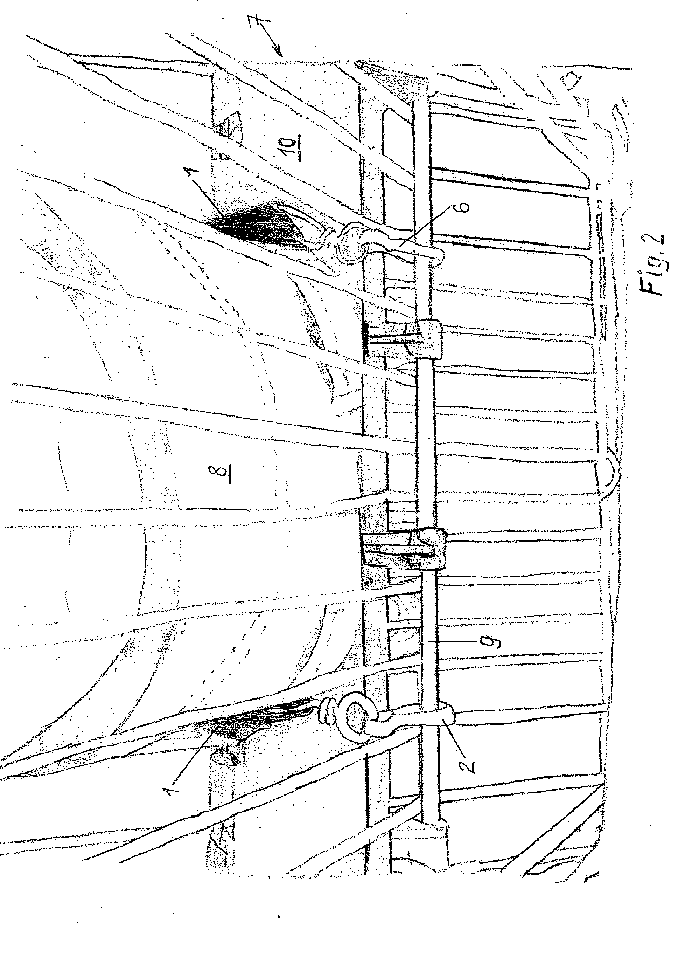

In Fig. 2 ist dargestellt, wie der erfindungsgemäße Sicherheitsgurt 1 angelegt werden soll, um ein im Kindersitz eines Einkaufswagens 7 sitzendes Kind 8 gegen Herausfallen oder Umstürzen mitsamt dem Einkaufswagen 7 zu schützen. Der Sicherheitsgurt 1 wird um den Unterleib des Kindes 8 gelegt und mit Hilfe der Schnell-Befestigungsmittel (Karabinerhaken) 2 und 6 an einem an der Rückenlehne des Kindersitzes quer verlaufenden Gitterstab 9 befestigt, im dargestellten Beispiel festgehakt. Dieser quer verlaufende Gitterstab 9 sollte sich dabei etwa auf der Höhe der Sitzplatte 10 des Kindersitzes befinden. Durch Verschieben der Gürtelschnalle 3 auf dem Sicherheitsgurt 1 wird dessen Länge auf die Körpergröße des Kindes 8 eingestellt. Damit wird das Kind 8 sicher daran gehindert, sich so weit nach vom oder nach einer Seite zu beugen oder im Kindersitz aufzustehen und sich dabei weit nach vom oder zur Seite zu neigen, dass ein Übergewicht entstehen könnte, das zu einem Sturz des Kindes möglicherweise mitsamt dem Einkaufswagen 7 führen würde. Es ist dabei Wert darauf zu legen, dass die Befestigung tatsächlich an einem quer verlaufenden Gitterstab 9 der Rückenlehne des Kindersitzes erfolgt, der sich etwa auf der Höhe der Sitzplatte 10 befindet, denn dadurch wird vermieden, dass die Befestigungsmittel 2, 6 und auch der Sicherheitsgurt 1 selbst nach oben verrutschen, denn dies würde zu Unbequemlichkeiten für das Kind und dadurch zu dessen Unruhe führen; auch die angestrebte Sicherheit für das Kind wäre nicht mehr ausreichend gegeben.

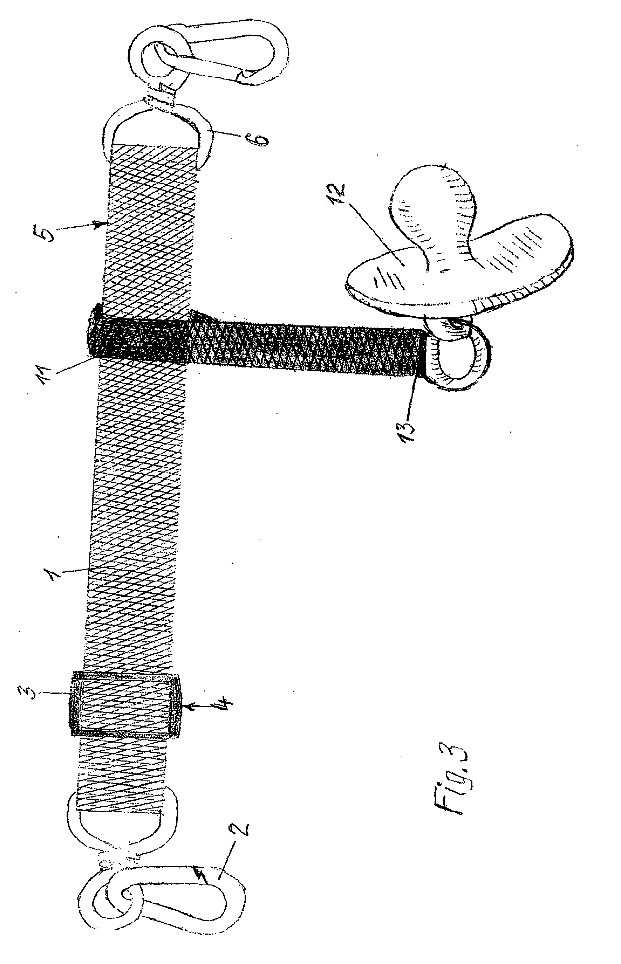

Fig. 3 zeigt eine sinnvolle Ergänzung zu dem erfindungsgemäßen Sicherheitsgurt 1 gemäß Fig. 1. Auf dem Sicherheitsgurt 1, vorzugsweise im Bereich der gebildeten Schlaufe 5, kann ein Zusatzteil 11 in Längsrichtung verschiebbar angeordnet sein, an dem ein beliebiger Gegenstand zur Beruhigung, zur Ablenkung oder Beschäftigung des Kindes angebracht werden kann. Es kann dies, wie in Fig. 3 dargestellt. z.B. eine Schnuller 12 oder ein kleines Spielzeug sein. Ein Kind, das durch ein kleines Spielzeug oder einen Schnuller 12 beruhigt oder beschäftigt ist, wird weniger durch bestimmte Auslagen von Waren dazu verleitet werden, nach diesen Waren greifen zu wollen und sich dazu aufzurichten und/oder sich vor oder zur Seite zu neigen. Gemäß Fig. 3 besteht das Zusatzteil 11 aus einem schlaufenförmig gefalteten Materialstreifen 11, der sich als Schlaufe entlang des Sicherheitsgurts 1 verschieben lässt und an dessen freiem Ende 13, das Spielzeug oder der Schnuller 12 angebracht ist.

### Bezugszeichenliste:

- 1: Sicherheitsgurt
- 2: erstes Befestigungsmittel (Karabinerhaken)
- 3: Gürtelschnalle
- 4: mittlerer Steg
- 5: Schlaufe
- 6: zweites Befestigungsmittel (Karabinerhaken)
- 7: Einkaufswagen
- 8: Kind
- 9: Gitterstab
- 10: Sitzplatte
- 11: Zusatzteil
- 12: Spielzeug, Schnuller
- 13: freies Ende des Zusatzteils

## Patentansprüche

1. Sicherheitsgurt zur Anwendung bei einem mit einem Kindersitz ausgestatteten Einkaufswagen, wobei sich der Kindersitz an der dem Benutzer zugewandten Rückwand des Einkaufswagens befindet und eine aus Längs- und Querstäben gebildete Rückenlehne aufweist, **dadurch gekennzeichnet, dass** der Sicherheitsgurt (1) aus einem Materialstreifen (1) von der Breite eines normalen (Hosen) Gürtels besteht, dass am einen Ende des Sicherheitsgurtes (1) ein erstes Befestigungsmittel (2) befestigt ist, dass auf dem Sicherheitsgurt (1) eine Gürtelschnalle (3) verschiebbar ist, mit deren mittleren Steg (4) das andere Ende des Sicherheitsgurtes (1) fest verbunden ist, wozu dieses andere Ende auf den Materialstreifen (1) des Sicherheitsgurtes (1) zurückgefaltet ist und so eine Schlaufe (5) gebildet ist, in der ein zweites Befestigungsmittel (6) beweglich gehalten ist.

2. Sicherheitsgurt nach Anspruch 1, **dadurch gekennzeichnet, dass** die beiden Befestigungsmittel (2, 6) als Karabiner ausgebildet sind.

3. Sicherheitsgurt nach Anspruch 1, **dadurch gekennzeichnet, dass** die beiden Befestigungsmittel (2, 6) an einem in Höhe der Sitzplatte (10) des Kindersitzes quer verlaufenden Stab (9) der Rückenlehne des Kindersitzes lösbar befestigt sind.

4. Sicherheitsgurt nach Anspruch 1, **dadurch gekennzeichnet, dass** auf dem Sicherheitsgurt (1) ein Zusatzteil (11) verschiebbar angeordnet ist, an dem kleine Gegenstände (12) beweglich anzuhängen sind.

5. Sicherheitsgurt nach Anspruch 4, **dadurch gekennzeichnet, dass** das Zusatzteil (11) aus einem zu einer Schlaufe gelegten Materialstreifen besteht, mit welcher Schlaufe es auf dem Sicherheitsgurt (1) verschiebbar ist und dass am freien Ende des Zusatzteils (11) oder der Schlaufe kleine Gegenstände anhängbar sind.
